# EUROPEAN PATENT SPECIFICATION

(11) **EP 3 950 217 B1**
(45) Date of publication and mention of the grant of the patent: **10.07.2024**
(21) Application number: 21189465.4
(22) Date of filing: 03.08.2021
(51) Int. Cl.: B27C 5/06

(54) **METHOD FOR THE SET-UP OF A WORK CENTRE TO PROCESS SECTION BARS, IN PARTICULAR MADE OF ALUMINIUM, LIGHT ALLOYS, PVC OR THE LIKE**
VERFAHREN ZUM EINRICHTEN EINES ARBEITSPLATZES ZUM BEARBEITEN VON PROFILSTÄBEN, INSBESONDERE AUS ALUMINIUM, LEICHTLEGIERUNGEN, PVC ODER DERGLEICHEN
PROCÉDÉ DE CONFIGURATION D'UN POSTE DE TRAVAIL POUR TRAITER DES BARRES DE SECTION, FABRIQUÉES EN PARTICULIER EN ALUMINIUM, EN ALLIAGES LÉGERS, EN PVC OU ANALOGUES

(30) Priority: 03.08.2020 IT 202000019027
(43) Date of publication of application: 09.02.2022
(73) Proprietor: F.O.M. Industrie S.r.l., 47841 Cattolica (RN) (IT)
(72) Inventor: LATTANZI, Lorenzo, 61121 Pesaro (PU) (IT)
(74) Representative: Studio Torta S.p.A.

(56) References cited:
- EP-A1- 3 636 384
- EP-A2- 1 992 464

## Description

### TECHNICAL FIELD

The invention relates to a method for the set-up of a work centre to process section bars, in particular made of aluminium, light alloys, PVC or the like.

### PRIOR ART

In the section bar processing industry, work centres are known, which comprise an elongated base extending in a first, substantially horizontal direction; a processing station, which is obtained along the base and is provided with an operating head to process the section bars; and at least one gripping and transporting unit, which is movable along the base and through the processing station.

The gripping and transporting unit has a slide, which is coupled to the base in a sliding manner, and a clamping vice comprising a first jaw and a second jaw, which is movable, relative to the first jaw and due to the thrust of an operating device, in a second, substantially horizontal direction, which is transverse to the first direction, between a clamping position and a release position to clamp and release at least one section bar.

The operating device generally comprises a rack, which is mounted so as to move in the second direction and is fixed to the output rod of an actuator cylinder, which is fixed to the slide parallel to the second direction.

The second jaw is locked on the rack by means of a coupling pin, whose disengagement from the rack allows operators to move the second jaw in the second direction so as to adjust the release position of the clamping vice.

The second jaw is further provided with a buffer made of elastically deformable material, which is coupled to the second jaw in a sliding manner so as to move in a third, substantially vertical direction, which is orthogonal to the aforesaid first and second directions.

The buffer has a fastening screw to allow operators to adjust the position of the buffer along the second jaw in the third direction.

The gripping and transporting unit finally comprises a roller support device, which is designed to support the section bar at the bottom between the two jaws and is mounted so as to move in the second direction.

The roller support device is provided with a fastening screw in order to allow operators to adjust the position of the roller support device in the second direction.

Known work centres of the type described above are affected by some drawbacks, which are mainly due to the fact that the set-up of the clamping vice, of the buffer and of the roller support device, which is manually carried out by operators, is relatively time-consuming and difficult and ensures a relatively small precision. For example, such a work centre is known from Patent Document EP 3 636 384 A1, on which the preamble of appended claim 1 is based.

### SUBJECT-MATTER OF THE INVENTION

The object of the invention is to provide a method for the set-up of a work centre to process section bars, in particular made of aluminium, light alloys, PVC or the like, which is designed to eliminate the aforementioned drawbacks in a straightforward, relatively low-cost manner.

According to the invention, there is provided a method for the set-up of a work centre to process section bars, in particular made of aluminium, light alloys, PVC or the like, according to the appended claims.

### BRIEF DESCRIPTION OF THE DRAWINGS

The invention will now be described with reference to the accompanying drawings, showing a non-limiting embodiment thereof, wherein:
figure 1 is a schematic perspective view, with parts removed for greater clarity, of a preferred embodiment of the work centre according to the invention;
figure 2 is a schematic side view, with parts removed for greater clarity, of the work centre of figure 1;
figure 3 is a schematic perspective view, with parts removed for greater clarity, of a first detail of the work centre of figure 1;
figures 4 and 5 show two schematic perspective views, with parts removed for greater clarity, of a second detail of the work centre of figure 1;
figure 6 is a schematic side view of a detail of figures 4 and 5;
figure 7 is a schematic perspective view, with parts removed for greater clarity, of a third detail of the work centre of figure 1; and
figure 8 is a schematic perspective view, with parts removed for greater clarity, of a fourth detail of the work centre of figure 1.

### PREFERRED EMBODIMENT OF THE INVENTION

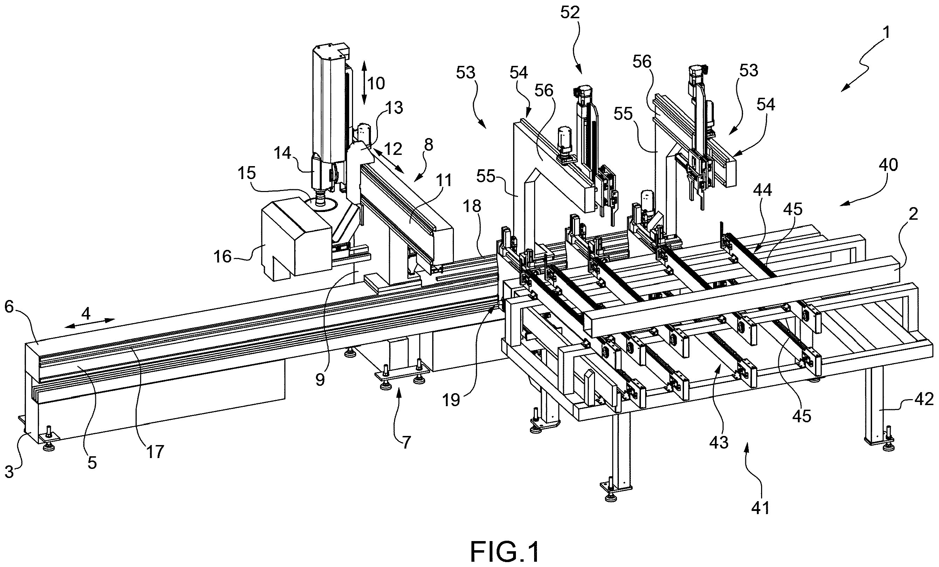

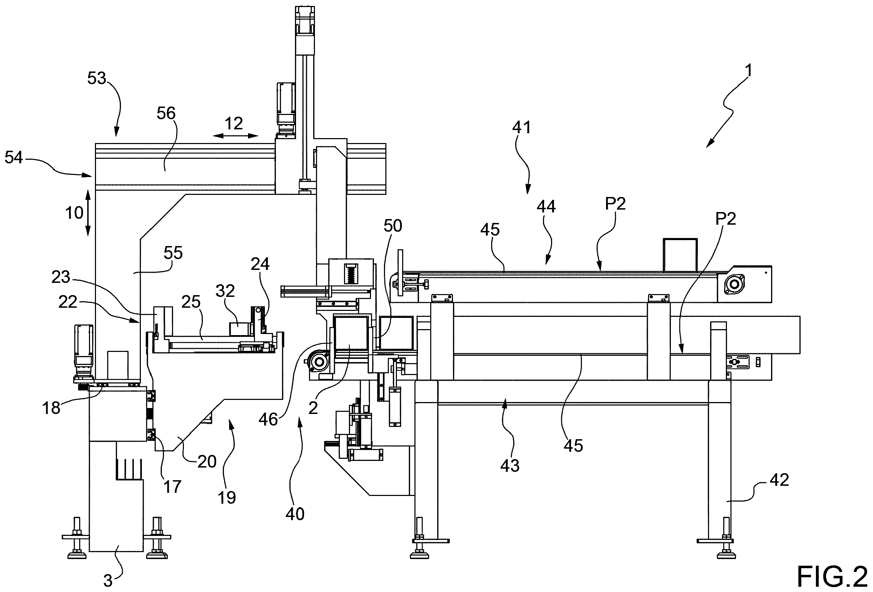

With reference to figures 1 and 2, number 1 indicates, as a whole, a work centre to process section bars 2 made of aluminium, light alloys, PVC or the like and with an elongated shape.

The work centre 1 comprises an elongated base 3, which extends in a horizontal direction 4, is delimited by a substantially flat and vertical front face 5 and is further delimited by a substantially flat and horizontal upper face 6.

The work centre 1 further comprises a processing station 7, which is obtained in an intermediate point of the base 3 and is provided with a gantry 8 comprising, in turn, a vertical upright 9, which is substantially parallel to a direction 10 transverse to the direction 4, and a horizontal cross member 11, which is substantially parallel to a direction 12 orthogonal to the directions 4 and 10.

The gantry 8 is fixed in the direction 4 and supports an operating head 13, which is coupled to the cross member 11 in a sliding manner so as to make straight movements along the cross member 11 in the direction 12 and is provided with an electrospindle 14, which is coupled to the head 13 in a sliding manner in order to move in the direction 10.

The electrospindle 14 carries, fitted in it, a tool 15 to process the section bars 2 (for example, for milling and/or boring and/or cutting operations) and cooperates with a tool-holding store 16 connected to the upright 9.

The work centre 1 further has a first guide device 17, which is obtained on the face 5 parallel to the direction 4 and extends between the free ends of the base 3 and, hence, substantially along the entire base 3, and a second guide device 18, which is obtained on the face 6 parallel to the direction 4 and extends between the station 7 and a free end of the base 3.

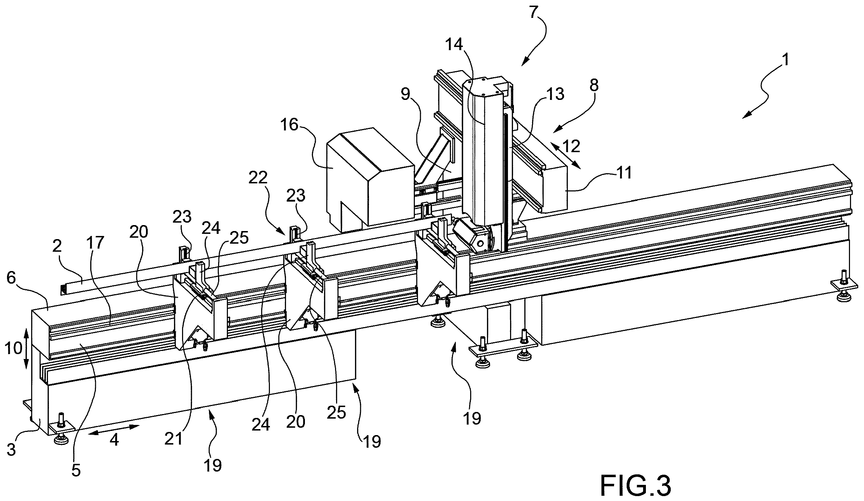

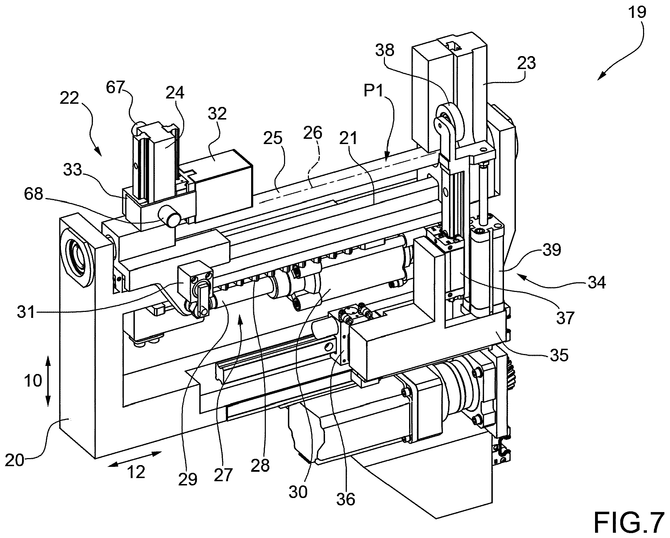

According to figures 3 and 7, the work centre 1 further comprises a plurality of gripping and transporting units 19 (specifically, three gripping and transporting units 19), which are mounted on the base 3 so as to move the section bars 2 in the direction 4.

Each unit 19 comprises a motor-drive slide 20, which is coupled to the guide device 17 in a sliding manner so as to move along the base 3 in the direction 4 and has the shape of a shelf projecting from the face 5 in the direction 12.

The slide 20 is provided with a straight guide 21 fixed on an upper face of the slide 20 parallel to the direction 12 and supports a clamping vice 22 comprising two gripping jaws 23, 24 extending upwards from the slide 20 in the direction 10.

The vice 22 further comprises a support roller 25, which extends through the jaws 23, 24 in the direction 12, is mounted so as to rotate around a rotation axis 26 parallel to the direction 12 and defines, together with the rollers 25 of the other vices 22, a horizontal support surface P1 for a section bar 2.

The jaw 23 is fixed in the direction 12 and the jaw 24 is coupled to the guide 21 in a sliding manner so as to make straight movements in the direction 12 between a clamping position and a release position to clamp and release a section bar 2.

The jaw 24 is moved along the guide 21 by an operating device 27 comprising a rack 28, which extends along the slide 20 in the direction 12, is coupled to the slide 20 in a sliding manner and is connected to an output rod 29 of an actuator cylinder 30, which is fixed to the slide 20 parallel to the direction 12.

The jaw 24 is locked on the rack 28 by means of an actuator cylinder 31, which is mounted on the jaw 24 parallel to the direction 4 and has an output rod (not shown), whose disengagement from the rack 28 allows the jaw 24 to be selectively moved along the rack 28 in the direction 12.

The jaw 24 is further provided with a buffer 32 made of elastically deformable material, which is coupled to the jaw 24 in a sliding manner so as to make straight movements in the direction 10 and is provided with a locking device 33 to lock the buffer 32 on the jaw 24.

The unit 19 is further provided with a roller support device 34 comprising a horizontal slide 35, which is coupled to the slide 20 in a sliding manner so as to move along the slide 20 in the direction 12 and has a locking device 36 to lock the slide 35 on the slide 20.

The device 34 further comprises a vertical slide 37, which is provided with an upper roller 38 supporting the section bars 2 and is coupled to the slide 35 in a sliding manner so as to move in the direction 10 due to the thrust of an upper cylinder 39, which is mounted on the slide 35 parallel to the direction 10.

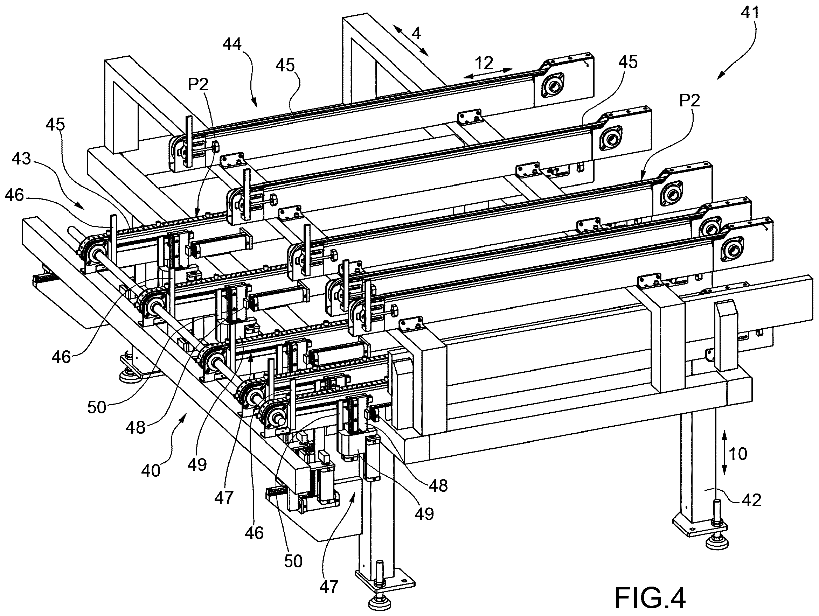

With reference to figures 1, 2, 4 and 5, the work centre 1 further comprises a loading/unloading station 40 to load/unload the section bars 2 into/from the gripping and transporting units 19.

The station 40 is aligned with the guide device 18 in the direction 12 and cooperates with a feeding unit 41, which extends in the direction 12 and comprises a support frame 42, on which there are mounted a lower conveyor device 43 to feed the section bars 2 to be processed to the station 40 and an upper conveyor device 44 to remove the section bars 2 that were just processed from the station 40.

The device 43 is arranged under the device 44 and projects from the device 44 towards the base 3 in the direction 12.

Each device 43, 44 comprises a plurality of motor-driven belt conveyors 45, which are parallel to one another and to the direction 12 and define a substantially horizontal support surface P2 for the section bars 2.

The device 43 cooperates with a plurality of limit stop elements 46, each fixed to the frame 42 between two adjacent conveyors 45, mounted in the area of the station 40 and projecting upwards from the surface P2 of the device 43 in the direction 10.

Each section bar 2 is pushed, so as to come into contact with the elements 46, by a plurality of pushing devices 47, each mounted between two adjacent conveyors 45 and comprising a horizontal slide 48, which is coupled to the frame 42 so as to make straight movements in the direction 12, and a vertical slide 49, which is coupled to the slide 48 so as to make straight movements in the direction 10.

The slide 49 is provided with a pushing rod 50, which extends in the direction 10 and is moved by the slide 49 between a raised operating position, in which the rod 50 projects above the surface P2 of the device 43, and a lowered rest position, in which the rod 50 extends under the surface P2 of the device 43.

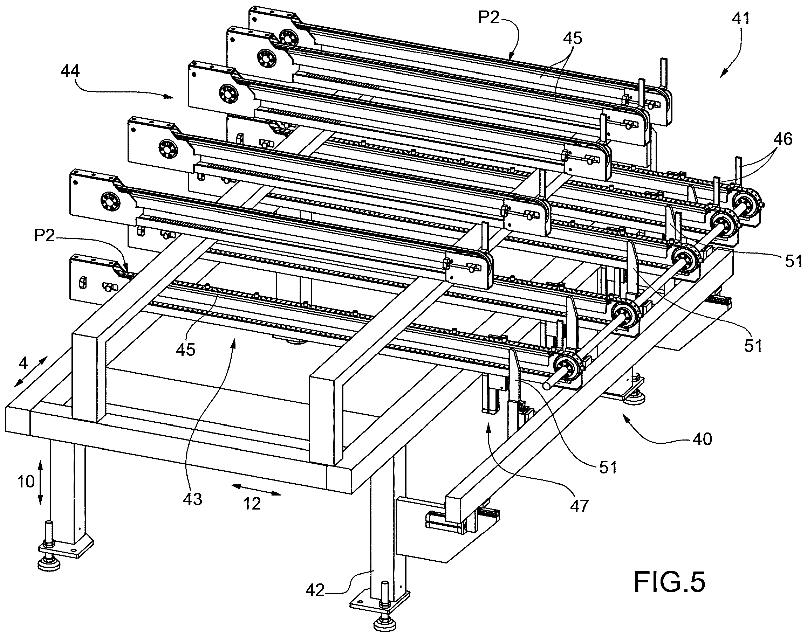

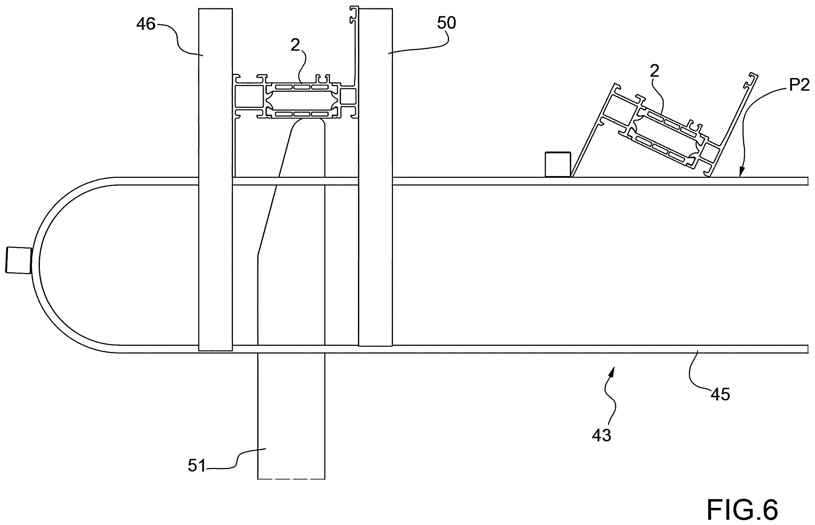

According to figures 5 and 6, the device 43 further cooperates with a plurality of lifting elements 51, which are mounted between the elements 46 and the rods 50.

Each element 51 is mounted between two adjacent conveyors 45, extends in the direction 10 and is movable in the direction 10 itself between a raised operating position, in which the element 51 projects above the surface P2 of the device 43 so as to rotate - and ensure the correct positioning of - shaped section bars 2, and a lowered rest position, in which the rod 50 extends under the surface P2 of the device 43.

According to a variant which is not shown herein, the elements 51 are movable in direction 12.

With reference to figure 1, the station 40 is provided with a transfer assembly 52 to transfer the section bars 2 between the devices 43, 44 and the vices 22.

The assembly 52 comprises a plurality of transfer units 53 (specifically, two units 53) mounted on the guide device 18.

Each unit 53 comprises an overhead crane 54 having a vertical upright 55, which extends upwards from the base 3 in the direction 10, is coupled to the device 18 in a sliding manner so as to make straight movements along the base 3 in the direction 4 and carries, connected to an upper free end of its, a horizontal cross member 56 extending above the base 3 and the station 40 in the direction 12.

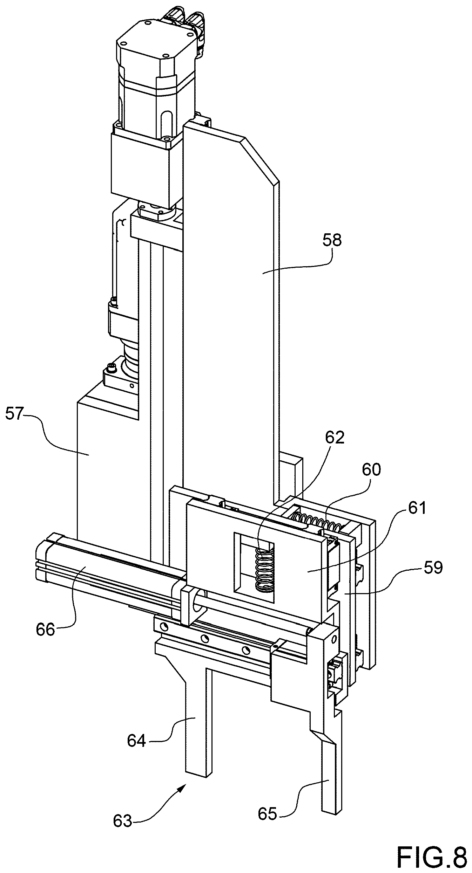

According to figure 8, the unit 53 further comprises a first horizontal slide 57, which is coupled to the cross member 56 in a sliding manner so as to make straight movements along the cross member 56 in the direction 12, and a first vertical slide 58, which is coupled to the horizontal slide 57 in a sliding manner so as to make straight movements along the horizontal slide 57 in the direction 10.

The unit 53 further comprises a second horizontal slide 59, which is coupled to the vertical slide 58 in a sliding manner through the interposition of a spring shock absorber device 60 so as to make straight movements along the vertical slide 58 in the direction 12.

The unit 53 is further provided with a second vertical slide 61, which is coupled to the horizontal slide 59 in a sliding manner through the interposition of a spring shock absorber device 62 so as to make straight movements along the horizontal slide 59 in the direction 10.

The vertical slide 61 supports a clamping vice 63 comprising a fixed jaw 64 projecting downwards from the vertical slide 61 in the direction 10 and a movable jaw 65, which projects downwards from the vertical slide 61 in the direction 10 and is coupled to the vertical slide 61 in a sliding manner so as to make straight movements in the direction 12 between a clamping position and a release position to clamp and release a section bar 2 due to the thrust of an actuator cylinder 66, which is fixed to the vertical slide 61 parallel to the direction 12.

The devices 60, 62 allow the vices 63 to correctly retrieve the section bar 2 from the conveyors 45 of the device 43 and to correctly release the section bar 2 into the vices 22 regardless of the actual position of the section bar 2 on the conveyors 45 of the device 43 and of geometric shape differences of the section bar 2.

The devices 60, 62 further allow the vices 63 to place the section bar 2 in the vices 22 with an insertion thrust in the directions 10 and 12.

With regard to what discussed above, it should be pointed out that the vices 22 are U-shaped with a concavity facing upwards and the vices 63 are U-shaped with a concavity facing downwards.

The operation of the work centre 1 will now be described with reference to figures 1 and 2 and assuming that one single section bar 2 is processed.

The section bar 2 taken into account is fed by the conveyor device 43 to the loading/unloading station 40 and it comes into contact with the limit stop elements 46.

At this point, the pushing rods 50 of the pushing devices 47 are lifted above the surface P2 of the device 43 and moved along the frame 42 in the direction 12 so as to correctly place the section bar 2 against the elements 46 and allow the clamping vices 63 of the transfer assembly 52 to correctly transfer the section bar 2 into the clamping vices 22 of the gripping and transporting units 19.

When the second bar 2 has a shaped profile, the lifting elements 51 are also raised above the surface P2 of the device 43 so as to correctly position the section bar 2 and allow the pushing devices 47 to correctly lock it against the limit stop elements 46 and the clamping vices 63 of the transfer assembly 52 to correctly transfer it into the clamping vices 22 of the gripping and transporting units 19.

Subsequently, the section bar 2 is moved by the unit 19 along the base 3, at first, in order to allow the operating head 13 to process it and, then, in order to transfer it again to the station 40.

Finally, the section bar 2 is transferred, by means of the assembly 52, from the vices 22 of the units 19 onto the conveyor device 44.

The clamping vice 22 of each gripping and transporting unit 19 is set up by means of the clamping vice 63 of a transfer unit 53 depending on the shape and on the dimensions of the section bar 2 and according to an automatic set-up cycle comprising the steps of:
disengaging the actuator cylinder 31 from the rack 28;
grabbing a dragging pin 67 projecting from the jaw 24 by means of the vice 63 and moving the jaw 24 along the guide 21 in the direction 12;
engaging the actuator cylinder 31 again in the rack 28 in order to lock the jaw 24 along the guide 21;
releasing the locking device 33 of the buffer 32;
grabbing a dragging pin 68 projecting from the buffer 32 by means of the vice 63 and moving the buffer 32 along the jaw 24 in the direction 10;
activating the locking device 33 again in order to lock the buffer 32 along the jaw 24;
releasing the locking device 36 of the roller support device 34;
grabbing the upper roller 38 by means of the vice 63 and moving the horizontal slide 35 along the slide 20 in the direction 12; and
activating the locking device 36 again in order to lock the slide 35 along the slide 20.

According to some embodiments which are not shown herein;
the loading/unloading station 40 is eliminated and replaced by a loading station and an unloading station arranged on opposite sides of the processing station 7 in the direction 4;
the loading/unloading station 40 is eliminated and replaced by a loading station and an unloading station arranged on opposite sides of the base 3 in the direction 12;
the guide device 18 is obtained on a rear face of the base 3; and
the gantry 8 is movable along the base 3 in the direction 4.

According to a further variant which is not shown herein, the transfer assembly 52 is eliminated and replaced by a robotic manipulator comprising a plurality of articulated arms and a transfer unit mounted at the free end of the articulated arms.

The transfer unit comprises two locking vices, which are parallel to one another and are completely similar to the vices 63.

The clamping vices are movable relative to one another depending on the shape and on the dimensions of the section bars 2 and are cushioned by means of load cells contained in the articulated arms.

## Claims

1. A method for the set-up of a work centre to process section bars (2), in particular made of aluminium, light alloys, PVC or the like, the work centre comprising an elongated base (3) extending in a first, substantially horizontal direction (4); an operating head (13) to process the section bars (2); at least one gripping unit (19) provided with a first clamping vice (22) comprising a first jaw (23) and a second jaw (24), which are movable relative to one another in a second direction (12), which is substantially horizontal and transverse to the first direction (4), between a clamping position to clamp at least one section bar (2) and a release position, the second jaw (24) being coupled in a sliding manner to a guide device (21), which is parallel to the second direction (12), so as to selectively control the release position of the first clamping vice (22); and at least one loading and/or unloading station (40), which is obtained along the base (3) in order to load the section bars (2) to be processed into the first clamping vice (22) and/or unload the section bars (2) that were just processed from the first clamping vice (22); the method being **characterized in that** it comprises the steps of:
grabbing the second jaw (24) by means of a second clamping vice (63);
moving the second clamping vice (63) and the second jaw (24) in the second direction (12) in order to adjust the release position of the first clamping vice (22);
releasing the second jaw (24) from the second clamping vice (63); and
transferring the section bars (2) between the first clamping vice (22) and the loading and/or unloading station (40) by means of the second clamping vice (63).

2. A method according to claim 1, wherein the gripping unit (19) is further provided with a first locking device (31) to lock the second jaw (24) in the second direction (12) in the release position; the method further comprising the steps of:
moving the first locking device (31) to an unlocked position of the second jaw (24) before moving the second clamping vice (63) and the second jaw (24) in the second direction (12); and
moving the first locking device (31) to a locked position of the second jaw (24) in the release position after having moved the second clamping vice (63) and the second jaw (24) in the second direction (12).

3. A method according to claim 2, wherein the gripping unit (19) is further provided with an operating device (27) to move the second jaw (24) between said clamping and release positions; the first locking device (31) being mounted on the second jaw (24) so as get coupled to the operating device (27) when it is arranged in said locked position and disengage the operating device (27) when it is arranged in said unlocked position.

4. A method according to any one of the preceding claims, wherein at least one of said first and second jaws (23, 24) is provided with a buffer (32), which is made of an elastically deformable material and is coupled to the jaw (23, 24) in a sliding manner so as to move in a third direction (10), which is orthogonal to said first and second directions (4, 12); the method comprising the steps of:
grabbing the buffer (32) by means of the second clamping vice (63);
moving the second clamping vice (63) and the buffer (32) in the third direction (10) in order to adjust the position of the buffer (32) in the third direction (10); and
releasing the buffer (32) from the second clamping vice (63).

5. A method according to claim 4, wherein the gripping unit (19) is further provided with a second locking device (33) to lock the buffer (32) on the relative jaw (23, 24) in the third direction (10); the method further comprising the steps of:
moving the second locking device (33) to an unlocked position of the buffer (32) before moving the buffer (32) and the second clamping vice (63) in the third direction (10); and
moving the second locking device (33) to a locked position of the buffer (32) after having moved the buffer (32) and the second clamping vice (63) in the third direction (10).

6. A method according to any one of the preceding claims, wherein the gripping unit (19) is further provided with a roller support device (34), which is designed to support the section bar (2) at the bottom between said first and second jaws (23, 24) and is mounted so as to move in the second direction (12); the method further comprising the steps of:
grabbing the roller support device (34) by means of the second clamping vice (63);
moving the second clamping vice (63) and the roller support device (34) in the second direction (12) in order to adjust the position of the roller support device (34) in the second direction (12); and
releasing the roller support device (34) from the second clamping vice (63).

7. A method according to claim 6, wherein the gripping unit (19) is further provided with a third locking device (36) to lock the roller support device (34) in the second direction (12); the method further comprising the steps of:
moving the third locking device (36) to an unlocked position of the roller support device (34) before moving the roller support device (34) and the second clamping vice (63) in the second direction (12); and
moving the third locking device (36) to a locked position of the roller support device (34) after having moved the roller support device (34) and the second clamping vice (63) in the second direction (12).

## Patentansprüche

1. Ein Verfahren zum Einrichten eines Bearbeitungszentrums zum Bearbeiten von Profilstäben (2), insbesondere aus Aluminium, Leichtmetalllegierungen, PVC oder dergleichen, wobei das Bearbeitungszentrum Folgendes umfasst: eine langgestreckte Basis (3), die sich in einer ersten, im Wesentlichen horizontalen Richtung (4) erstreckt; einen Arbeitskopf (13) zur Bearbeitung der Profilstäbe (2), mindestens eine Greifeinheit (19), die mit einem ersten Spannstock (22) versehen ist, der eine erste Klemmbacke (23) und eine zweite Klemmbacke (24) umfasst, die relativ zueinander in einer zweiten Richtung (12) beweglich sind, die im Wesentlichen horizontal und quer zur ersten Richtung (4) ist, zwischen einer Einspannposition zum Einspannen mindestens einer Profilstange (2) und einer Freigabeposition, wobei die zweite Klemmbacke (24) gleitend mit einer Führungsvorrichtung (21) gekoppelt ist, die zur zweiten Richtung (12) parallel verläuft, um die Freigabeposition des ersten Spannstocks (22) selektiv zu steuern; und mindestens eine Belade- und/oder Entladestation (40), die entlang der Basis (3) angeordnet ist, um die zu bearbeitenden Profilstäbe (2) in den ersten Spannstock (22) zu laden und/oder die gerade bearbeiteten Profilstäbe (2) aus dem ersten Spannstock (22) zu entladen; wobei das Verfahren **dadurch gekennzeichnet ist, dass** es die folgenden Schritte umfasst:
Greifen der zweiten Klemmbacke (24) mittels eines zweiten Spannstocks (63);
Bewegen des zweiten Spannstocks (63) und der zweiten Klemmbacke (24) in der zweiten Richtung (12), um die Freigabeposition des ersten Spannstocks (22) einzustellen;
Freigeben der zweiten Klemmbacke (24) aus dem zweiten Spannstock (63); und
Überführen der Profilstangen (2) zwischen dem ersten Spannstock (22) und der Be- und/oder Entladestation (40) mittels des zweiten Spannstocks (63).

2. Ein Verfahren nach Anspruch 1, wobei die Greifeinheit (19) ferner mit einer ersten Verriegelungsvorrichtung (31) versehen ist, um die zweite Klemmbacke (24) in der Freigabeposition in der zweiten Richtung (12) zu verriegeln; wobei das Verfahren ferner die folgenden Schritte umfasst:
Bewegen der ersten Verriegelungsvorrichtung (31) in eine entriegelte Position der zweiten Klemmbacke (24), bevor der zweite Spannstock (63) und die zweite Klemmbacke (24) in die zweite Richtung (12) bewegt werden; und
Bewegen der ersten Verriegelungsvorrichtung (31) in eine verriegelte Position der zweiten Klemmbacke (24) in der Freigabeposition, nachdem der zweite Spannstock (63) und die zweite Klemmbacke (24) in der zweiten Richtung (12) bewegt wurden.

3. Ein Verfahren nach Anspruch 2, wobei die Greifeinheit (19) ferner mit einer Betätigungsvorrichtung (27) versehen ist, um die zweite Klemmbacke (24) zwischen der genannten Einspann- und Freigabeposition zu bewegen, wobei die erste Verriegelungsvorrichtung (31) an der zweiten Klemmbacke (24) so angebracht ist, dass sie mit der Betätigungsvorrichtung (27) gekoppelt wird, wenn sie in der genannten verriegelten Position angeordnet ist, und die Betätigungsvorrichtung (27) außer Eingriff gebracht wird, wenn sie in der genannten entriegelten Position angeordnet ist.

4. Ein Verfahren nach irgendeinem der vorstehenden Ansprüche, wobei mindestens eine der genannten Klemmbacken eins und zwei (23, 24) mit einem Puffer (32) versehen ist, der aus einem elastisch verformbaren Material hergestellt ist und mit der Klemmbacke (23, 24) gleitend gekoppelt ist, um sich in einer dritten Richtung (10) zu bewegen, die orthogonal zur genannten ersten und zweiten Richtung (4, 12) ist, wobei das Verfahren die folgenden Schritte umfasst:
Greifen des Puffers (32) mittels des zweiten Spannstocks (63);
Bewegen des zweiten Spannstocks (63) und des Puffers (32) in der dritten Richtung (10), um die Position des Puffers (32) in der dritten Richtung (10) einzustellen; und
Freigeben des Puffers (32) aus dem zweiten Spannstock (63).

5. Ein Verfahren nach Anspruch 4, wobei die Greifeinheit (19) ferner mit einer zweiten Verriegelungsvorrichtung (33) versehen ist, um den Puffer (32) an der entsprechenden Klemmbacke (23, 24) in der dritten Richtung (10) zu verriegeln; wobei das Verfahren ferner die folgenden Schritte umfasst:
Bewegen der zweiten Verriegelungsvorrichtung (33) in eine entriegelte Position des Puffers (32), bevor der Puffer (32) und der zweite Spannstock (63) in die dritte Richtung (10) bewegt werden; und
Bewegen der zweiten Verriegelungsvorrichtung (33) in eine verriegelte Position des Puffers (32), nachdem der Puffer (32) und der zweite Spannstock (63) in die dritte Richtung (10) bewegt wurden.

6. Ein Verfahren nach irgendeinem der vorstehenden Ansprüche, wobei die Greifeinheit (19) ferner mit einer Rollen-Stützvorrichtung (34) versehen ist, die so ausgelegt ist, dass sie die Profilstange (2) zwischen der genannten ersten und der zweiten Klemmbacke (23, 24) von unten stützt, und die so montiert ist, dass sie sich in der zweiten Richtung (12) bewegt; wobei das Verfahren ferner die folgenden Schritte umfasst:
Greifen der Rollen-Stützvorrichtung (34) mittels des zweiten Spannstocks (63);
Bewegen des zweiten Spannstocks (63) und der Rollen-Stützvorrichtung (34) in der zweiten Richtung (12), um die Position der Rollen-Stützvorrichtung (34) in der zweiten Richtung (12) einzustellen; und
Freigeben der Rollen-Stützvorrichtung (34) aus dem zweiten Spannstock (63).

7. Ein Verfahren nach Anspruch 6, wobei die Greifeinheit (19) ferner mit einer dritten Verriegelungsvorrichtung (36) versehen ist, um die Rollen-Stützvorrichtung (34) in der zweiten Richtung (12) zu verriegeln; wobei das Verfahren ferner die folgenden Schritte umfasst:
Bewegen der dritten Verriegelungsvorrichtung (36) in eine entriegelte Position der Rollen-Stützvorrichtung (34), bevor die Rollen-Stützvorrichtung (34) und der zweite Spannstock (63) in die zweite Richtung (12) bewegt werden; und
Bewegen der dritten Verriegelungsvorrichtung (36) in eine verriegelte Position der Rollen-Stützvorrichtung (34), nachdem die Rollen-Stützvorrichtung (34) und der zweite Spannstock (63) in die zweite Richtung (12) bewegt wurden.

## Revendications

1. Procédé de configuration d'un centre de travail pour traiter des profilés (2), en particulier fabriquées à partir d'aluminium, d'alliages légers, de PVC ou similaire, le centre de travail comprenant une base allongée (3) s'étendant dans une première direction (4) sensiblement horizontale ; une tête opérationnelle (13) pour traiter les barres de section (2) ; au moins une unité de préhension (19) prévue avec un premier étau de serrage (22) comprenant une première mâchoire (23) et une deuxième mâchoire (24) qui sont mobiles l'une par rapport à l'autre dans une deuxième direction (12), qui est sensiblement horizontale et transversale par rapport à la première direction (4), entre une position de serrage pour serrer au moins une barre de section (2) et une position de libération, la deuxième mâchoire (24) étant couplée, de manière coulissante, à un dispositif de guidage (21), qui est parallèle à la deuxième direction (12), afin de commander sélectivement la position de libération du premier étau de serrage (22) ; et au moins une station de chargement et/ou de déchargement (40) qui est obtenue le long de la base (3) afin de charger les barres de section (2) à traiter dans le premier étau de serrage (22) et/ou décharger les barres de section (2) qui viennent d'être traitées, du premier étau de serrage (22) ; le procédé étant **caractérisé en ce qu'**il comprend les étapes comprenant les faits de :
saisir la deuxième mâchoire (24) au moyen d'un deuxième étau de serrage (63) ;
déplacer le deuxième étau de serrage (63) et la deuxième mâchoire (24) dans la deuxième direction (12) afin de régler la position de libération du premier étau de serrage (22) ;
libérer la deuxième mâchoire (24) du deuxième étau de serrage (63) ; et
transférer les barres de section (2) entre le premier étau de serrage (22) et la station de chargement et/ou déchargement (40) au moyen du deuxième étau de serrage (63).

2. Procédé selon la revendication 1, dans lequel l'unité de préhension (19) est en outre prévue avec un premier dispositif de blocage (31) pour bloquer la deuxième mâchoire (24) dans la deuxième direction (12) dans la position de libération ; le procédé comprenant en outre les étapes comprenant les faits de :
déplacer le premier dispositif de blocage (31) dans une position débloquée de la deuxième mâchoire (24) avant de déplacer le deuxième étau de serrage (63) et la deuxième mâchoire (24) dans la deuxième direction (12) ; et
déplacer le premier dispositif de blocage (31) dans une position bloquée de la deuxième mâchoire (24) dans la position de libération après avoir déplacé le deuxième étau de serrage (63) et la deuxième mâchoire (24) dans la deuxième direction (12).

3. Procédé selon la revendication 2, dans lequel l'unité de préhension (19) est en outre prévue avec un dispositif opérationnel (27) pour déplacer la deuxième mâchoire (24) entre lesdites positions de serrage et de libération ; le premier dispositif de blocage (31) étant monté sur la deuxième mâchoire (24) afin d'être couplé au dispositif opérationnel (27) lorsqu'il est agencé dans la position bloquée et se dégager du dispositif opérationnel (27) lorsqu'il est agencé dans ladite position débloquée.

4. Procédé selon l'une quelconque des revendications précédentes, dans lequel au moins l'une desdites première et deuxième mâchoires (23, 24) est prévue avec un tampon (32), qui est réalisé avec un matériau élastiquement déformable et est couplé à la mâchoire (23, 24) d'une manière coulissante afin de se déplacer dans une troisième direction (10), qui est orthogonale par rapport auxdites première et deuxième directions (4, 12) ; le procédé comprenant les étapes comprenant les faits de :
saisir le tampon (32) au moyen du deuxième étau de serrage (63) ;
déplacer le deuxième étau de serrage (63) et le tampon (32) dans la troisième direction (10) afin de régler la position du tampon (32) dans la troisième direction (10) ; et
libérer le tampon (32) du deuxième étau de serrage (63).

5. Procédé selon la revendication 4, dans lequel l'unité de préhension (19) est en outre prévue avec un deuxième dispositif de blocage (33) pour bloquer le tampon (32) sur la mâchoire (23, 24) relative dans la troisième direction (10) ; le procédé comprenant en outre les étapes comprenant les faits de :
déplacer le deuxième dispositif de blocage (33) dans une position débloquée du tampon (32) avant de déplacer le tampon (32) et le deuxième étau de serrage (63) dans la troisième direction (10) ; et
déplacer le deuxième dispositif de blocage (33) dans une position bloquée du tampon (32) après avoir déplacé le tampon (32) et le deuxième étau de serrage (63) dans la troisième direction (10).

6. Procédé selon l'une quelconque des revendications précédentes, dans lequel l'unité de préhension (19) est en outre prévue avec un dispositif de support de rouleau (34), qui est conçu pour supporter la barre de section (2) au fond entre lesdites première et deuxième mâchoires (23, 24) et est monté afin de se déplacer dans la deuxième direction (12) ; le procédé comprenant en outre les étapes comprenant les faits de :
saisir le dispositif de support de rouleau (34) au moyen du deuxième étau de serrage (63) ;
déplacer le deuxième étau de serrage (63) et le dispositif de support de rouleau (34) dans la deuxième direction (12) afin de régler la position du dispositif de support de rouleau (34) dans la deuxième direction (12) ; et
libérer le dispositif de support de rouleau (34) du deuxième étau de serrage (63).

7. Procédé selon la revendication 6, dans lequel l'unité de préhension (19) est en outre prévue avec un troisième dispositif de blocage (36) pour bloquer le dispositif de support de rouleau (34) dans la deuxième direction (12) ; le procédé comprenant en outre les étapes comprenant les faits de :
déplacer le troisième dispositif de blocage (36) dans une position débloquée du dispositif de support de rouleau (34) avant de déplacer le dispositif de support de rouleau (34) et le deuxième étau de serrage (63) dans la deuxième direction (12) ; et
déplacer le troisième dispositif de blocage (36) dans une position bloquée du dispositif de support de rouleau (34) après avoir déplacé le dispositif de support de rouleau (34) et le deuxième étau de serrage (63) dans la deuxième direction (12).
